(19) **Europäisches Patentamt / European Patent Office / Office européen des brevets**

(11) **EP 4 490 784 B1**

(12) **EUROPEAN PATENT SPECIFICATION**

(45) Date of publication and mention
of the grant of the patent:
**06.05.2026 Bulletin 2026/19**

(21) Application number: **23708497.5**

(22) Date of filing: **06.03.2023**

(51) International Patent Classification (IPC):
$H01M\ 4/04^{(2006.01)}$    $H01M\ 4/133^{(2010.01)}$
$H01M\ 4/1393^{(2010.01)}$    $H01M\ 4/62^{(2006.01)}$
$H01M\ 4/134^{(2010.01)}$    $H01M\ 4/137^{(2010.01)}$
$H01M\ 4/1395^{(2010.01)}$    $H01M\ 4/1399^{(2010.01)}$
$H01M\ 4/66^{(2006.01)}$    $H01M\ 4/02^{(2006.01)}$

(52) Cooperative Patent Classification (CPC):
H01M 4/622; H01M 4/0411; H01M 4/133;
H01M 4/134; H01M 4/137; H01M 4/1393;
H01M 4/1395; H01M 4/1399; H01M 4/62;
H01M 4/625; H01M 4/661; H01M 2004/027;
Y02E 60/10

(86) International application number:
**PCT/EP2023/055531**

(87) International publication number:
**WO 2023/169969 (14.09.2023 Gazette 2023/37)**

(54) **POWDEROUS POLYMER BINDER FOR HIGH VISCOUS PROCESSING FOR ANODE MANUFACTURE**

PULVERFÖRMIGES POLYMERBINDEMITTEL FÜR HOCHVISKOSES VERARBEITEN ZUR ANODENHERSTELLUNG

LIANT POLYMÈRE POUDRÉ DE TRAITEMENT HAUTEMENT VISQUEUX POUR LA FABRICATION D'ANODE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.03.2022 EP 22161075**

(43) Date of publication of application:
**15.01.2025 Bulletin 2025/03**

(73) Proprietor: **ARLANXEO Deutschland GmbH
41540 Dormagen (DE)**

(72) Inventors:
• **BRANDAU, Sven**
 **51371 Leverkusen (DE)**
• **FRUEH, Thomas**
 **42115 Wuppertal (DE)**
• **WIEGMANN, Eike**
 **38106 Braunschweig (DE)**
• **HASELRIEDER, Wolfgang**
 **38116 Braunschweig (DE)**
• **KWADE, Arno**
 **38176 Wendeburg (DE)**

(56) References cited:
EP-A1- 3 902 855    US-A1- 2016 075 867
US-A1- 2019 305 316

**Description**

**Field of Invention**

The present invention describes a composition as a binder for an anode of a rechargeable battery. The composition comprises a non-spherical powderous cross-linked polymer which is obtained by grinding. The cross-linked polymer comprises the monomer units 1,3 butadiene, (hydroxyethyl)methacrylate (HEMA) and trimethylolpropane trimethacrylate (TMPTMA) and the non-spherical powderous cross-linked polymer has a particle size D(90) of 180 - 450 $\mu$m; the composition further comprises a silica anti-caking agent.

**Background of Invention**

A rechargeable battery (also known as a storage battery, a secondary cell or an accumulator) is a type of electrical battery which can be charged, discharged and recharged many times. The rechargeable battery plays an important role for creating a greener and more sustainable future.

The rechargeable battery comprises an anode, a cathode, an electrolytic solution and a separator. A binder is also present within the rechargeable battery and is usually a rubber polymer. The binder holds an active material and a conductive material which are then cast onto a current collector of the electrodes.

The binder plays important roles regarding performance of the rechargeable battery. Firstly, the binder helps to disperse the other components (e.g. active material, conductive material) in liquid during casting onto a current collector (with some also acting as a thickener), enabling a homogeneous distribution. Second, the binder holds together the various components of the rechargeable battery, including the active material and the conductive material, with the current collector, ensuring good contact, through chemical or physical interactions, the binder bridges these separate components, keeping them together and ensuring mechanical integrity of the electrode without significantly impacting electronic or ionic conductivity during charging and discharging. Thirdly. The binder acts as an interface between the current collector and electrolyte and can thus protect the current collector from corrosion.

The binder needs the following characteristics: flexible, insoluble in the electrolyte, have a good adherence to a current collector, be chemically and electrochemically stable and easy to apply to the current collector.

To achieve the aforementioned characteristics a successful casting of the binder and e.g. the active material and the conductive material onto the current collector of the electrodes depends not only on the binder itself but also a casting method.

EP3902855A1 discloses a powderous (pulverulent) composition comprising, a polymer consisting of the monomer units acrylonitrile, 1,3-butadiene and trimethylolpropane trimethacrylate (TMPTMA). The powderous (pulverulent) composition includes a silica anti-caking agent. The powderous (pulverulent) composition has an average particle diameter in the range 0.01 to 4 mm. The powderous (pulverulent) composition is used for a production of tyre treads, in which there is simultaneous improvement in wet skid resistance, dry grip and rolling resistance, with good mixing characteristics. EP3902855A1 does not disclose a polymer including the monomer units (hydroxyethyl)methacrylate (HEMA).

EP3053938A discloses a microgel polymer comprising the monomer units acrylonitrile, 1,3-butadiene, (hydroxyethyl)methacrylate (HEMA) and trimethylolpropane trimethacrylate (TMPTMA). The polymer is worked up by spray drying to provide spherical or virtually spherical microgel particle agglomerates with an average particle diameter of 2 to 500 $\mu$m. The microgel polymers are additives which can be incorporated easily into thermoset compositions such as plastics, for improving the impact strength and energy absorption to the point of fracture, while at the same time retaining the qualities such as mechanical strength, glass transition temperature and modulus of elasticity.

An article by J.-H. Lee et al. (Journal of Power Sources 147 (2005) 249-255) discloses conventional methods of casting an anode surface using the emulsified styrene butadiene rubber (SBR) polymer and sodium carboxymethyl cellulose (CMC) mixture as anode binder. The article by J.-H. Lee et al discloses binder mixtures pre casting containing a solids weight fraction of 35% which is relatively low.

US 2019/305316 A1 describes dry process electrode films, and energy storage devices incorporating the same, including a microparticulate non-fibrillizable binder having certain particle sizes. The electrode films are described to exhibit improved mechanical and processing characteristics. Also disclosed are methods for processing such microparticulate non-fibrillizable electrode film binders, and for incorporating the microparticulate non-fibrillizable binders in electrode films.

There is a need to provide improved binder compositions, a use of the binder composition for an anode in a rechargeable battery and a process for the manufacture of an anode.

**EP 4 490 784 B1**

## Summary of Invention

In a first aspect the present invention relates to a composition. The composition comprises a non-spherical powderous cross-linked polymer which is obtained by grinding. The cross-linked polymer comprises the monomer units 1,3 butadiene, (hydroxyethyl)methacrylate (HEMA) and trimethylolpropane trimethacrylate (TMPTMA) and the non-spherical powderous cross-linked polymer has a particle size D(90) of 180 - 450 $\mu$m; the composition further comprises a silica anti-caking agent.

In a further aspect, the present invention relates to use of the aforementioned composition as a binder for an anode of a rechargeable battery.

In a further aspect the present invention relates to a binder composition for an anode of a rechargeable battery. The binder composition for the anode comprises, the composition which comprises the non-spherical powderous cross-linked polymer which is obtained by grinding. The cross-linked polymer comprises the monomer units 1,3 butadiene, (hydroxyethyl)methacrylate (HEMA) and trimethylolpropane trimethacrylate (TMPTMA) and the non-spherical powderous cross-linked polymer has a particle size D(90) of 180 - 450 $\mu$m; the composition further comprises a silica anti-caking agent. The binder composition also comprises a conductive material. The binder composition also comprises an active material.

In a further aspect the present invention relates to a process for the manufacture of an anode. The process comprises, providing to an extruder the composition which comprises the non-spherical powderous cross-linked polymer which is obtained by grinding. The cross-linked polymer comprises the monomer units 1,3 butadiene, (hydroxyethyl) methacrylate (HEMA) and trimethylolpropane trimethacrylate (TMPTMA) and the non-spherical powderous cross-linked polymer has a particle size D(90) of 180 - 450 $\mu$m; the composition further comprises a silica anti-caking agent. The process also comprises providing to the extruder an active material and a conductive material and then laminating the resultant extrudate to a surface of an anode current collector.

It has been found that providing ground particles as opposed to spherical particles they are better for applications on anodes as binders, as their non-spherical shape traps and anchors active material and conductive material due to the irregular shape. This contrasts with using spray dried particles according to the prior art which leads to a slipping of the active material and the conductive material from which leads to a non-uniform agglomerated blend of binder, active material and conductive material, which in turn leads to agglomerated spots of binder, active material and conductive and thus a poor adhesion to a current collector and a poor quality coated current collector. There is a better distribution of active material and conductive material with the binder polymer. The particles according to the present invention have been developed to exhibit high shear resistance for extrusion-based processing.

The powder according to the invention if free flowing and facilitates a casting to a current collector with a high solids content. This contrasts with coating methods of the prior art using latex solvent systems which need batchwise coating as the first coatings are usually of poor quality and thus the coatings of the prior art need to be repeated in subsequent steps to build up the layers. The present invention eliminates a need for relatively high solvent content when casting on a current collector.

The process for the manufacture of the anode facilitates processing of high solid content slurries and granules for the manufacture of anodes. The process enables a continuous manufacture of anodes with a high output compared to batch manufacture of the prior art reducing time (e.g. drying time of solvents, multiple coating steps using solvent based coating) and energy. The extruded polymers as a paste leaving an extruder are hot and in liquid or pasty form and be applied directly to a current collector surface.

The process allows solids content processing of at least 70%wt compared to conventional solvent-based processing methods. A use of high solids content slurries with little solvent reduces a drying time of the coated electrode.

## Brief Description of Figures

Figure 1 shows the differences in a polymer obtained by a) spray drying and a polymer obtained by b) grinding.

Figure 2 show a coated current collector of which figure 2a is according to the prior art and which figure 2b is according to the present invention.

## Detailed Description

For a complete understanding of the present invention and the advantages thereof, reference is made to the following detailed description.

It should be appreciated that the various aspects and embodiments of the detailed description as disclosed herein are illustrative of the specific ways to make and use the invention and do not limit the scope of invention when taken into consideration with the claims and the detailed description. It will also be appreciated that features from different aspects and embodiments of the invention may be combined with features from different aspects and embodiments of the invention.

In a first aspect the present invention relates a composition. The composition comprises a non-spherical powderous cross-linked polymer which is obtained by grinding. The cross-linked polymer comprises the monomer units 1,3 butadiene, (hydroxyethyl)methacrylate (HEMA) and trimethylolpropane trimethacrylate (TMPTMA) and the non-spherical powderous cross-linked polymer has a particle size D(90) of 180 - 450 $\mu$m; the composition further comprises a silica anti-caking agent.

It is to be appreciated that the non-spherical powderous cross-linked polymer is a rubber.

For the avoidance of doubt, the non-spherical powderous cross-linked polymer is not hydrogenated.

The term powderous refers to, dry particles produced by the grinding of the polymer. The term dry infers a moisture content of $\leq$1wt%.

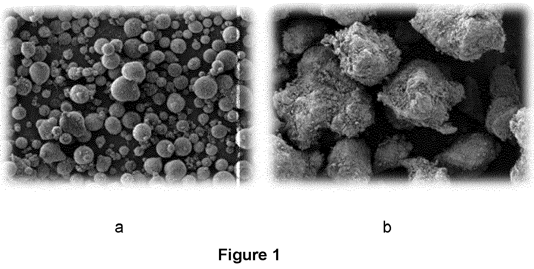

The term non-spherical means that the powdered polymer is not like a sphere in being round in shape i.e. is substantially not a geometrical object in three-dimensional space that is like the surface of a ball. It is known in the art that polymers obtained by grinding are non-spherical compared to polymers obtained by spray drying during a work-up procedure. Figure 1 shows the differences in a polymer obtained by a) spray drying and a polymer obtained by b) grinding, in particular Figure 1 a) shows polymers powders obtained by spray drying which have a shape like a sphere and being round in shape i.e. is substantially a geometrical object in three-dimensional space that is like the surface of a ball, in contrast; Figure 1 b) shows polymer powders obtained by grinding which have a rough outer surface.

A grinding of the cross-linked polymer is achieved using a grinding apparatus known in the art and a grinding process such as a cryogenic grinding, wet grinding, mechanical grinding or ball-mill grinding process, for such rubber based cross-linked polymers.

By a "grinding apparatus" is meant any apparatus which can exert enough shearing and/or crushing force to cause the material being ground to be broken into smaller pieces. Such apparatuses include hammermills including disintegrators and pin mills, disc mills, fluidized bed air-jet mills, jaw crushers, gyratory crushers, cage mills, pan crushers, ball, pebble rod and tube mills, disk attrition mills, attritors, disc refiners, etc.

The grinding apparatus is accordingly fitted with a sieve known in the art to provide the particle sizes particle size D(90) of 50 - 900 $\mu$m, preferably 100 - 600 $\mu$m, and most preferably 180 - 450 $\mu$m.

The composition comprises the silica anti-caking agent. Anti-caking agent refers to an additive admixed with the non-spherical powderous cross-linked polymer which is obtained by grinding. The anti-caking agent prevents a formation of clumps (caking, agglomeration) of the non-spherical powderous cross-linked polymer which is obtained by grinding. The anti-caking agent facilitates easing of packaging, transport and maintains flowability of the non-spherical powderous cross-linked polymer which is obtained by grinding.

The silica anti-caking agent is present in amount of of 3 to 15 wt%, with respect to the non-spherical powderous cross-linked polymer.

The term monomer units means that a structural unit derived from that monomer is included in the polymer obtained using that monomer.

The monomer units include 1,3 butadiene, trimethylolpropane trimethacrylate (TMPTMA) and (hydroxyethyl) methacrylate (HEMA).

1,3 butadiene is present in an amount of 99 to 32.5 wt% and preferably 97.5 to 45 wt%. trimethylolpropane trimethacrylate (TMPTMA) is present in an amount of 0.5 to 7.5 wt% and preferably 1 to 6 wt%. (Hydroxyethyl) methacrylate (HEMA) is present in an amount of 0.5 to 10 wt% and preferably 2.5 to 9 wt%.

The particle size D(90) of the non-spherical powderous cross-linked polymer can be determined using a laser diffuser. The samples were made using the Fraunhofer approximation, which the particle size distribution with the refractive and absorption index "1" calculated, determined. The volume histogram resulted in D90 as output of the analysis. the D90 describes the diameter where ninety percent of the non-spherical powderous cross-linked polymer distribution has a smaller particle size and ten percent has a larger particle size.

The cross-linked polymer may further comprise the monomer units acrylonitrile. Acrylonitrile is present in an amount of up to 50 wt% and preferably up to 40 wt%.

In a further aspect, the present invention relates to use of the aforementioned composition as a binder for an anode of a rechargeable battery.

In a further aspect the present invention relates to a electrode composition for an anode of a rechargeable battery. The electrode composition for the anode comprises, the composition which comprises the non-spherical powderous cross-linked polymer which is obtained by grinding as binder. The cross-linked polymer comprises the monomer units 1,3 butadiene, (hydroxyethyl)methacrylate (HEMA) and trimethylolpropane trimethacrylate (TMPTMA) and the non-spherical powderous cross-linked polymer has a particle size D(90) of 180 - 450 $\mu$m; the binder further comprises a silica anti-caking agent. The electrode composition also comprises a conductive material. The electrode composition also comprises an active material.

The active material can be carbon materials such as amorphous carbon, natural graphite, artificial graphite, natural black lead, mesocarbon microbead pitch-based carbon fiber and silicon-graphite. The active material can be a conductive polymer such as polyacene or polyaniline. The active material can be a metal such as silicon, tin, zinc, manganese, iron and nickel, or an alloy thereof, or an oxide thereof and a sulfate salt thereof. The active material can be at least one of the aforementioned, or any combination thereof.

The conductive material can be a carbon-based material such as carbon black (e.g. acetylene black, furnace black), graphite, graphene, carbon fibres (carbon nanofibers, carbon nanotubes and vapour-grown carbon fibres) and carbon flakes. The conductive material can be at least one of the aforementioned or any combination thereof.

The active material is present in an amount 85 to 99.9% by weight, and more preferably 90 to 99.75% by weight of the electrode composition.

The conductive material is present in amount of 0.5 to 20% by weight, and more preferably 1 to 10% by weight of the electrode composition.

In a further aspect the present invention relates to a process for the manufacture of an anode. The process comprises, providing to an extruder the composition which comprises the non-spherical powderous cross-linked polymer which is obtained by grinding. The cross-linked polymer comprises the monomer units 1,3 butadiene, (hydroxyethyl) methacrylate (HEMA) and trimethylolpropane trimethacrylate (TMPTMA) and the non-spherical powderous cross-linked polymer has a particle size D(90) of 180 - 450 $\mu$m; the composition further comprises a silica anti-caking agent. The process also comprises providing to the extruder an active material and a conductive material and then laminating the resultant extrudate to a surface of an anode current collector.

The extruder can include a single-screw or a multi-screw extruder. The extruder can comprise any number of barrels and types of screw element(s) and other single- or multi-shaft conveying kneaders.

The multi-screw extruder can be twin-screw extruders, ring extruders or planetary roller extruders, whereby twin-screw extruders and ring extruders are preferred. Twin screw extruders are for example counter-rotating intermeshing, counter-rotating non-intermeshing, co-rotating intermeshing and co-rotating non-intermeshing twin-screw extruders, where co-rotating intermeshing twin screw extruders are preferred.

Suitable extruder elements for the extruder are not only extruder screws but also kneading sections comprising kneader elements for energy input into and mixing the compositions. Examples of kneading elements include kneading blocks, which may be designed as double or triple flighted forward, backward or neutral conveying kneading blocks; single or double flighted screw mixing elements with grooves, single flighted tooth mixing elements, blister plates and single, double or triple flighted eccentric discs. The kneader elements may be assembled in any combination on shafts of the extruder, in particular the shafts of a twin-screw counter rotating or co-rotating twin screw extruder.

A further extruder element in the form of an extruder screw and/or a kneader can be provided downstream to a die plate or a gear pump and upstream to an outlet port. Particularly a plurality of conveying and/or degassing stages can be provided, wherein preferably each stage is optimised to the expected parameters particularly to the expected number of volatile compounds to be removed from the extrudate.

The extruder has at least one feeding section, preferably more than one. The compositions are added with a total solids content of material added to the extruder is at least 70wt% as a water-based paste.

The die plate of the extruder comprises at least one, preferably a plurality of perforation openings, which may have any form. For example, the perforation openings may have funnel or conical shape, a convergent or divergent nozzle shape, hour-glass shape, channel shape, circular or non-circular.

The extruder can either be heated via barrels to temperatures up to 300°C or cooled. In a preferred embodiment, the extruder comprises means to operate separate zones independently of each other at different temperatures so that the zones can either be heated, unheated or cooled.

The extruder is operated at a feed rate of 0.1 to 25000 kilograms per hour, or preferably a feed rate of 0.25 to 6000 kilograms per hour.

The conductive material and the active material can be initially premixed and then mixed with the composition which comprises the non-spherical powderous cross-linked polymer which is obtained by grinding wherein the cross-linked polymer comprises the monomer units 1,3 butadiene, (hydroxyethyl)methacrylate (HEMA) and trimethylolpropane trimethacrylate (TMPTMA) and the non-spherical powderous cross-linked polymer has a particle size D(90) of 180 - 450 $\mu$m and a silica anti-caking agent before being added to the extruder.

It is preferable that all components are added to the extruder and therefore mixed in the extruder as it was found this ensures a most homogenous extrudate; however, a premixing of components prior to addition to the extruder is also possible.

The anode current collector is a material having electrical conductivity and electrochemical durability so long as it does not undergo and cause chemical changes in the fabricated battery. The anode current collector can be made of iron, copper, aluminium, nickel, stainless steel, titanium, tantalum, gold or platinum. The current collector can be in the form of a foil or a mesh.

The anode current collector typically has a thickness in a range of 2 - 500 $\mu$m. The present invention and advantages thereof are demonstrated by the following non-limiting examples.

Materials

The following materials were used as provided:

Monomer units acrylonitrile, trimethylolpropane trimethacrylate (TMPTMA) and (hydroxyethyl)methacrylate (HEMA) from Sigma-Aldrich, 1,3-butadiene from INEOS.

Solution Fe(II)SO$_4$: Premix solution contains 0.986 g Fe(II)SO$_4$ * 7 H$_2$O and 2.0 g Rongalit$^®$ C in 400g water.

EDTA: as complexing agent from Sigma-Aldrich.

Fatty acid: CAS 67701-08-6, emulsifier for polymerisation.

Rosin acid: Na salt of disproportionated rosin acid CAS 61790-51-0, emulsifier for polymerisation.

AOS: alpha olefin sulfonate CAS 68439-57-6, emulsifier for polymerisation.

t-DDM: Molecular weight regulator from Arlanxeo Deutschland GmbH.

Trigonox$^®$ NT50, p-menthane hydroperoxide from Akzo-Degussa. Initiator for emulsion polymerisation.

Diethyl hydroxylamine: polymerisation terminator, CAS 3710-84-7.

Antioxidant: equal mix of Irganox$^®$ 1520 - 2-Methyl-4,6-bis(octylsulfanylmethyl)phenol (BASF AG, Germany), Irganox$^®$ 1076 - n-Octadecyl- $\beta$ -(4-hydroxy-3,5-di-tert-butylphenyl)-propionate (BASF AG, Germany) and Wingstay$^®$ L - Poly(dicyclopentadiene-co-p-cresol) (Omnova, Italy).

Lithium-nickel-cobalt-manganese-oxide: active material; (6/2/2 type) from BASF.

Conductive carbon black: conductive agent; Super C65 from TIMCAL Company.

Conductive graphite, conductive agent, SFG 6L from Imerys.

Polyvinylidene fluoride (PVDF): cathode binder, Solef 5130 from Solvay.

Aluminium foil: cathode current collector; thickness 20 $\mu$m; 1085 alloy from Hydro Aluminum

N-methyl pyrrolidone (NMP): solvent; CAS 872-50-4 from BASF.

Polyethylene ceramic film: as separator, thickness 28 $\mu$m (Separion, 28 $\mu$m) from Litarion

Electrolyte composed of EC/EMC (3:7) with 2 vol.-% vinyl chloride (VC) and 1M lithium hexafluorophosphate (LiPF$_6$), LP57 from Gotion Inc.

Synthetic graphite, anode active material, CAS 7782-42-5.

CMC, anode binder, PA Walocel 2000 from Dow.

SBR latex polymer for anode binder, CAS 9010-93-9. Comparative example.

Copper foil, anode current collector, thickness 8 $\mu$m, Electrolytic copper foil NC-WS from Sumitomo.

Polytetrafluoroethylene (PTFE) glass fabric foil, release foil from Hightechflon Films And Fabrics.

Adhesive tape, tesafix 5696 extra strong from Tesa.

<u>Method for the manufacture of the cross-linked polymer comprising the monomer units 1,3 butadiene (additionally acrylonitrile), (hydroxyethyl)methacrylate (HEMA) and trimethylolpropane trimethacrylate (TMPTMA)</u>

Also described is a method for manufacturing a comparative example C, according to EP3902855A1 comprising monomer units acrylonitrile, 1,3-butadiene and trimethylolpropane trimethylolpropane trimethacrylate (TMPTMA), i.e. not (hydroxyethyl)methacrylate (HEMA).

Also described is a method for manufacturing a comparative example D, according to EP3053938A comprising monomer units acrylonitrile, 1,3-butadiene, (hydroxyethyl)methacrylate (HEMA) and trimethylolpropane trimethacrylate (TMPTMA) where the polymer is worked up by spray drying to provide spherical or virtually spherical microgel particle agglomerates.

The components according to Table 1 were used for the manufacture of the respective cross-linked polymer. In case of monomer increments, the amount of monomer and the point of addition by given conversion is added in brackets.

**Table 1.** Components used for the manufacture of polymer

| Ingredients (phm) | Polymer | | | |
|---|---|---|---|---|
| | A* | B* | C | D |
| Acrylonitrile | 0 | 30.3 | 36.0 | 18.5 |
| 1,3-butadiene | 88.3 (10.0@70%, 10.0@85%) | 56.2 | 62.5 | 72.5 |
| TMPTMA | 4.4 (1.1@70%, 1.1@85%) | 6.0 (3.0@40%, 2.0@50%) | 1.5 | 4.0 |
| HEMA | 7.3 | 7.5 | 0 | 5.0 |
| Water | 270 | 300 | 220 | 300 |
| Fatty acid | 0.5 | 0.5 | 2.6 | 3.0 |
| Rosin acid | 4.5 | 4.5 | 0.9 | 0 |
| AOS | 0 | 0 | 0 | 5.0 |
| pH ($\pm$ 0.5) | 10.5 | 10.5 | 10.5 | 10.5 |
| t-DDM | 0.5 | 0.5 | 0.7 | 0.2 |
| Trigonox® NT 50 | 0.05 | 0.02 | 0.02 | 0.03 |
| Solution Fe(II)SO$_4$ | 0.06 | 0.05 | 0.01 | 0.03 |
| Diethyl hydroxylamine | 0.2 | 0.2 | 0.3 | 0.2 |
| Polymerisation temp (°C) ($\pm$ 0.5) | 15.0 | 15.0 | 13.0 | 15.0 |
| Conversion (%) | 97.5 | 96.0 | 90.0 | 100.0 |

The respective polymer was produced batchwise in a 5L autoclave with a stirrer system. In each of the autoclave batch, 1.25 kg of a mixture of monomers, a total amount of water of 2.1 kg was used, as was EDTA in an equimolar amount based on Fe(II) from the Fe(II)SO$_4$ 1.9 kg of this amount of water were initially charged with emulsifier (fatty acid and acid) in the autoclave and purged with a stream of nitrogen. The t-DDM was added and the reactor was closed. Once the contents were brought to the polymerisation temperature, polymerisation was initiated by the addition of the solution Fe(II)SO$_4$ premix solution and Trigonox® NT50. The polymerisation was monitored by gravimetric determinations of conversion. On attainment of the conversion shown, the polymerisation was terminated by adding a 25% aqueous solution of the diethyl hydroxylamine polymerisation terminator.

Unconverted monomer units (i.e. non-polymerised) and remaining volatiles were removed via steam distillation.

A 50% dispersion of antioxidant were mixed with a dispersion of polymer latices.

<u>Work up of the cross-linked polymer</u>

The various latices were worked up either according to Route 1 or Route 2 as shown in Table 2.

**Table 2.** Work up procedure of latices

|  | A* | B* | C | D |
|---|---|---|---|---|
| Work-up procedure | Route 1 | Route 1 | Route 1 | Route 2 |
| Coagulation salt | $Al_2(SO_4)_3$ | $Al_2(SO_4)_3$ | $CaCl_2$ | - |

Route 1: The latices were coagulated with either calcium chloride or aluminium sulphate. The latices were coagulated with calcium chloride at pH 6 (adjusted with acetic acid or HCl) and dried for 16 hours in a vacuum oven to provide the respective cross-linked polymer. Alternative the latices were coagulated with aluminium sulphate at pH 8 (adjusted with acetic acid or HCl) and dried for 16 hours in a vacuum oven to provide cross-linked polymer.

Manufacture of the non-spherical powderous cross-linked polymer was achieved as follows. The cross-linked polymer was mixed with the amount of anti-caking agent specified (see table 4) in a beaker and the mixture slowly added to a RETSCH ZM 200 Ultra Centrifugal Mill to grind the cross-linked polymer. The RETSCH ZM 200 Ultra Centrifugal Mill was equipped with an annular sieve of average mesh size 0.25 mm and operated at a speed of 10 000 to 18 000 rpm to obtain different particle sizes. During grinding the mill was cooled with liquid Nitrogen. After grinding, the non-spherical powderous cross-linked polymer was removed from the grinding chamber by means of a cyclone and collected. The resultant non-spherical powderous cross-linked polymers were dried for 24h at 55°C.

Route 2: The water was removed from the latex by means of spray drying from the polymer, and the polymer was obtained in the form of a fine powder. The separating anti-caking agent was added into the spray tower as a dry powder.

Table 3 shows various properties of polymers based on the work-up procedure, anti-caking agent and a clumping tendency following the grinding.

The clumping tendency of the powders was rated by visual assessment and evaluated based on the following criteria for the respective sample powders: 1 (the sample does not clump, and is free flowing), 2 (the sample exhibits only slight clumping and the clumps fall apart under low pressure or by themselves) and 3 (the sample exhibits slight clumping and stick together with the clumping being broken apart under gentle pressure).

As can be seen from table 3, samples containing silica as anti-caking agent do not clump and are free flowing. Such samples are therefore most useful for a continuous extrusion process which allows high solid content processing with continuous binder addition.

It is to be noted examples/samples denoted by* are according to the findings of the present invention.

The aggregate state of liquid in Table 3, refers to a latex, sample 1 uses SBR rubber, which is a styrene-butadiene or styrene-butadiene rubber (SBR).

**Table 3** Properties of polymers based on the work-up procedure, anti-caking agent and a clumping tendency following the grinding.

| Sample | 1 | 2 | 3* | 4* | 5* | 6 | 7 | 8 | 9 | 10 | 11 |
|---|---|---|---|---|---|---|---|---|---|---|---|
| Polymer | E (SBR) | A (M75) | A (M75) | B (M20) | B (M20) | C (XL3364) | D | A (M75) | A (M75) | B (M20) | B (M20) |
| Work-up procedure | - | - | Route 1 | Route 1 | Route 1 | Route 1 | Route 2 | Route 1 | Route 1 | Route 1 | Route 1 |
| Coagulation salt | - | - | $Al_2(SO_4)_3$ | $Al_2(SO_4)_3$ | $Al_2(SO_4)_3$ | $CaCl_2$ | - | $Al_2(SO_4)_3$ | $Al_2(SO_4)_3$ | $Al_2(SO_4)_3$ | $Al_2(SO_4)_3$ |
| Aggregate state | Liquid | Liquid | Solid | Solid | Solid | Solid | Solid | Solid | Solid | Solid | Solid |
| Anti-caking agent | - | - | Silica | Silica | Silica | Silica | $CaCO_3$ | Alu C 805 | $CaCO_3$ | $CaCO_3$ | Alu C 805 |
| Particle size D(90) [$\mu$m] | - | - | 448 | 279 | 184 | 371 | 277 | 379 | 269 | 342 | 233 |
| Clumping tendency | - | - | 1 | 1 | 1 | 1 | 1 | 3 | 2 | 2 | 2 |

Manufacture of anode by extrusion and calendaring process

Samples 1-7 were used for manufacture of a respective anode.

Samples 8-11 were deemed unsuitable as they exhibit clumping, which would lead to a non-uniform dispersion of the conductive material and active material in a blend with the polymer (binder) during extrusion and would lead to further clumping in an extruder.

The following was used for manufacture of the anode. A mass percentage of active material (graphite) of 93 wt%, carbon black of 1.4 wt%, CMC of 1.87 wt% and different types of sample (according to 1-7) of 3.73 wt%.

A water dispersion was made thereof with a solid content of 76.5 wt%.

The water dispersion was continuously dispersed in a twin-screw extruder (Rheomex PTW16/40 OS, Thermo Fisher Scientific, 16 mm screw diameter) with a rotational speed of 700 rpm and throughput of 800 g/h, resulting in a highly viscous anode electrode paste.

The high viscous anode electrode paste exits the extruder, through a 3 mm round nozzle and is captured by a strand granulator (hot die cutting HAAKE PolyLab OS, Thermo Fisher Scientific) and split into 1 mm granules.

The granules are placed within the gap of a calendar and pressed to the final coating thickness of 100 μm while coating gets laminated onto the copper substrate simultaneously. During the coating step, a release film covers the surface of the calendar rolls, which was operated at a constant gap width of 165 μm and a line speed 0.2 m/min. Following the coating, continuous drying takes place in an IR-radiator field with at an intensity of 0.75 W/cm$^2$. The electrode density of the anodes is 1.3 g/cm$^3$.

Adhesion of binder to current collector and uniformity of coating

The adhesive strength of the coated electrode to the substrate with regard to adhesive and cohesive failure is investigated with a uniaxial testing machine (Z020, Zwick GmbH & Co. KG). Located within the test machine are two coplanar plates, which are covered with double-sided adhesive tape (tesafix 5696 extra strong, Tesa). A round electrode punch with a diameter of 12 mm is positioned between the plates. Here the electrode sample is compressed with a force of 68 N over a dwell time of 30 s. Afterwards the testing machine pulls off the contacted sample and the maximum tensile force is detected. The adhesion strength is calculated according to the following equation:

$$adhesion\ strenght\ \left[\frac{N}{mm^2}\right] = \frac{maximum\ tensile\ Force\ [N]}{area\ [\pi * r^2]}$$

For the determination of the adhesive strength for each electrode ten measurements are taken then averaged.

The uniformity of the coating (surface coverage, roughness, uniformity) was rated by visual assessment based on the following criteria for the respect anodes: 1 (electrode do not show any defects and has best surface quality), 2 (electrode shows slight defects and surface roughness with part delamination from current collector) and 3 (electrode is not able to be produced to be used showing a high number of defects or up to complete delamination).

The adhesion strength with the current collector of the anode and a uniformity of the coating was determined and the results shown in Table 4.

**Table 4.** Adhesion strength with the current collector of the anode and coating uniformity

| Polymer Sample | Adhesion strength (MPa) | Uniformity of coating |
|---|---|---|
| 1 | 0.14 | 2 |
| 2 | 0.1 | 2 |
| 3* | 0.78 | 1 |
| 4* | 0.96 | 1 |
| 5* | 0.78 | 1 |
| 6 | 0.65 | 2 |
| 7 | Not possible | 3 |

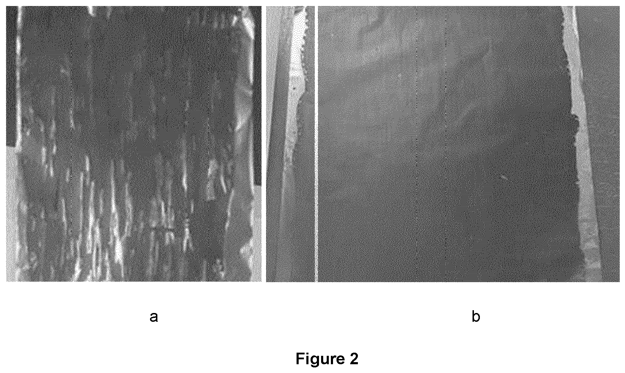

As can be seen from the results in Table 4. The current collector cast with polymer of the prior art (spherical polymer particles, samples 1 and 2) show a poor-quality coated electrode. This is further illustrated in Figure 2, which shows in Figure 2a that the coating is very poor and non-uniform on the current collector. Furthermore samples 1 and 2 have a poor adhesion strength. This is attributed to the fact that these samples are obtained by spray drying. Samples 1 and 2 clearly as being latex based anode binders cannot be used for extrusion-based electrode processing, while the inventive powderous samples show a good processing and high adhesion strength.

Furthermore sample 6 without the monomer unit (hydroxyethyl)methacrylate (HEMA) shows a poor coating quality and relatively poor adhesion strength. Thus, demonstrating the efficacy of (hydroxyethyl)methacrylate (HEMA) monomer units according to the invention.

Sample 7 which was spray dried and used a calcium carbonate anti caking agent shown an extremely poor coating quality, where the adhesion strength could simply be not measured.

Samples 3-5, according to the invention were shown to be the optimal non-spherical powderous cross-linked polymer obtained by grinding according for use as polymer binder. These polymers exhibit a significantly high adhesion strength, and the quality of anode is shown in Figure 2b. It is clear from Figure 2b that the electrode does not show any defects and has best surface quality.

## Applicability in rechargeable battery

For analysing the composition according to the present invention as a binder for an anode of an electrode, a cathode was manufactured for a rechargeable battery.

A reference cathode binder of 93.00 wt% NCM 622, 2.00 wt% Super C65, 1.00 wt% SFG6L and 4.00 wt% PVDF polymer was manufactured according to the following process steps. All powdered raw materials were homogenized simultaneously for 15 min in a tumbler mixer. The PVDF is pre-dissolved in NMP and all ingredients are mixed in a 10 L planetary mixer applying 60 min dispersing time. The solid content of the NMP based dispersion is 75 wt%. The suspension is then coated on an aluminium current collector foil (Hydro Aluminium) by doctor blade and dried by a tripartite continuous convection (80 °C/ 100 °C/ 120 °C each in a drying section of 2 m length) to achieve the target mass loading of 23,3 mg/cm$^2$ (~3.6 mAh/cm$^2$). The cathode was then calendared to a density of 3,0 g/cm$^3$.

For an analysis of the electrochemical properties, pouch full cells in single-layer configuration were built (anode, ≈ 30 cm$^2$; cathode, ≈ 25 cm$^2$; 4 cells for each parameter) and electrochemically cycled (Maccor Inc.). The electrodes are vacuum post-dried at 120°C for 16h under argon atmosphere. Further components of the pouch cells are a ceramic separator and the electrolyte composed of EC/EMC (3:7) with 2 vol.-% vinyl chloride (VC) and 1M lithium hexafluoropho-sphate (LiPF$_6$). After formation is completed (3 cycles at 0.1C), the cyclization strategy of the cells is based on a C-rate test (0.2C/0.2C, 0.5C/0.5C, 1C/1C, 2C/2C, 3C/3C charge/discharge for 3 cycles each) and a subsequent long-term cyclization (0.5C/0.5C). The discharge method is based on CC-steps (constant current) and the charging method on CCCV-steps (constant current constant voltage), which is terminated when the charging current falls below 0.05C. The overall cell voltage operates between 3.0 and 4.2V and depth of discharge is always 100%.

The discharging specific capacity of the rechargeable battery was calculated after three formation steps with charge-/discharge rate of 0.1 C. Capacity retention was determined as the ratio of the discharge specific capacity after 75 cycles over the discharge specific capacity at a charge-/discharge rate of 0.5 C.

The discharging specific capacity and the capacity retention of cells comprising the polymers according to the present invention was measured, and the result shown in Table 5.

**Table 5.** Discharging specific capacity and capacity retention of a rechargeable battery cell comprising the polymers according to the present invention

| Polymer | Discharging specific capacity, 01C [mAh/g] | Capacity retention after 75 cycles 0,5C [mAh/g] |
|---------|---------------------------------------------|-------------------------------------------------|
| 1 | not possible | not possible |
| 3 | 155.23 | 135.31 |
| 4 | 161.36 | 150.24 |

While for latex based sample 1, no discharging specific capacity and capacity retention could be measured, a good battery performance can be achieved for the electrodes using the innovative powderous binders.

Having thus described the present invention and the advantages thereof, it should be appreciated that the various aspects and embodiments of the present invention as disclosed herein are merely illustrative of specific ways to make and use the invention.

The various aspects and embodiments of the present invention do not limit the scope of the invention when taken into consideration with the appended claims and the foregoing detailed description.

What is desired to be protected by letters patent is set forth in the following claims.

**Claims**

1. A composition comprising:

    - a non-spherical powderous cross-linked polymer obtained by grinding, wherein the cross-linked polymer comprises the monomer units 1,3 butadiene, (hydroxyethyl)methacrylate and trimethylolpropane trimethacrylate, and the non-spherical powderous cross-linked polymer has a particle size D(90) of 180 - 450 $\mu$m; and
    - a silica anti-caking agent.

2. The composition according to claim 1, wherein the cross-linked polymer further comprises the monomer units acrylonitrile.

3. The composition according to any one of the above claims, wherein the polymer comprises the monomer units in the following amounts 1,3 butadiene in a range of 99 to 32.5 wt%, (hydroxyethyl)methacrylate in a range of 0.5 to 10 wt%, trimethylolpropane trimethacrylate in a range of 0.5 to 7.5 wt% and acrylonitrile in a range of 0 to 50 wt%.

4. The composition according to any one of the above claims, wherein the silica anti-caking agent is present in an amount of 3 - 15 wt% with respect to the cross-linked polymer.

5. A use of the composition according to any one of the above claims as a binder for an anode of a rechargeable battery.

6. An electrode composition for an anode of a rechargeable battery comprising:

    - the composition of any one of the above claims,
    - an active material; and
    - a conductive material.

7. The electrode composition according to claim 5, wherein the active material is selected from at least one of carbon materials, a conductive polymer, a metal or alloy thereof or salt thereof or sulphate thereof or any combination thereof.

8. The electrode composition according to any one of claims 5 - 6, wherein the conductive material is a carbon-based material.

9. A process for the manufacture of an anode comprising:

    - providing to an extruder the composition according to any one of claims 1 - 4,
    - providing to the extruder an active material and a conductive material; and
    - laminating the resultant extrudate to a surface of an anode current collector.

10. The process according to claim 9, wherein a total solids content of the composition according to any one of claims 1 - 4, an active material and a conductive material is at least 70wt%.

11. The process according to claim 9, wherein the anode current collector comprises a metal selected from one of iron, copper, aluminium, nickel, stainless steel, titanium, tantalum, gold or platinum.

**Patentansprüche**

1. Zusammensetzung, umfassend:

    - ein durch Mahlen erhaltenes nicht kugelförmiges pulverförmiges vernetztes Polymer, wobei das vernetzte Polymer die Monomereinheiten 1,3-Butadien, (Hydroxyethyl)methacrylat und Trimethylolpropantrimethacrylat umfasst und das nicht kugelförmige pulverförmige vernetzte Polymer eine Teilchengröße D(90) von 180 - 450 $\mu$m aufweist; und
    - ein Siliciumdioxid-Antibackmittel.

2. Zusammensetzung nach Anspruch 1, wobei das vernetzte Polymer ferner die Monomereinheit Acrylnitril umfasst.

**3.** Zusammensetzung nach einem der vorstehenden Ansprüche, wobei das Polymer die Monomereinheiten in den folgenden Mengen umfasst: 1,3 Butadien in einem Bereich von 99 bis 32,5 Gew.-%, (Hydroxyethyl)methacrylat in einem Bereich von 0,5 bis 10 Gew.-%, Trimethylolpropantrimethacrylat in einem Bereich von 0,5 bis 7,5 Gew.-% und Acrylnitril in einem Bereich von 0 bis 50 Gew.-%.

**4.** Zusammensetzung nach einem der vorstehenden Ansprüche, wobei das Siliciumdioxid-Antibackmittel in einer Menge von 3 - 15 Gew.-%, bezogen auf das vernetzte Polymer, vorliegt.

**5.** Verwendung der Zusammensetzung nach einem der vorhergehenden Ansprüche als Bindemittel für eine Anode für eine wiederaufladbare Batterie.

**6.** Elektrodenzusammensetzung für eine Anode einer wiederaufladbaren Batterie, umfassend:

  - die Zusammensetzung nach einem der obigen Ansprüche,
  - ein Aktivmaterial und
  - ein leitfähiges Material.

**7.** Elektrodenzusammensetzung nach Anspruch 5, wobei das Aktivmaterial aus mindestens einem von Kohlenstoffmaterialien, einem leitfähigen Polymer, einem Metall oder einer Legierung davon oder einem Salz oder einem Sulfat davon und/oder einer beliebigen Kombination davon ausgewählt ist.

**8.** Elektrodenzusammensetzung nach einem der Ansprüche 5 - 6, wobei es sich bei dem leitfähigen Material um ein Material auf Kohlenstoffbasis handelt.

**9.** Verfahren zur Herstellung einer Anode, umfassend:

  - Zuführen der Zusammensetzung nach einem der Ansprüche 1 bis 4 zu einem Extruder,
  - Zuführen eines Aktivmaterials und eines leitfähigen Materials zu dem Extruder und
  - Auflaminieren des resultierenden Extrudats auf eine Oberfläche eines Anodenstromkollektors.

**10.** Verfahren nach Anspruch 9, wobei der Gesamtfeststoffgehalt der Zusammensetzung nach einem der Ansprüche 1 - 4, eines Aktivmaterials und eines leitfähigen Materials mindestens 70 Gew.-% beträgt.

**11.** Verfahren nach Anspruch 9, wobei der Anodenstromkollektor ein Metall umfasst, das aus einem von Eisen, Kupfer, Aluminium, Nickel, nichtrostendem Stahl, Titan, Tantal, Gold oder Platin ausgewählt ist.


**Revendications**

**1.** Composition comprenant :

  - un polymère réticulé pulvérulent non sphérique obtenu par broyage, dans laquelle le polymère réticulé comprend les motifs monomères 1,3 butadiène, méthacrylate d'hydroxyéthyle et triméthacrylate de triméthylolpropane, et le polymère réticulé pulvérulent non sphérique a une taille de particule D(90) de 180 à 450 $\mu$m ; et
  - un agent anti-mottant de silice.

**2.** Composition selon la revendication 1, dans laquelle le polymère réticulé comprend en outre les motifs monomères acrylonitrile.

**3.** Composition selon l'une quelconque des revendications précédentes, dans laquelle le polymère comprend les motifs monomères dans les quantités suivantes 1,3 butadiène dans une plage de 99 à 32,5 % en poids, méthacrylate d'hydroxyéthyle dans une plage de 0,5 à 10 % en poids, triméthacrylate de triméthylolpropane dans une plage de 0,5 à 7,5 % en poids et acrylonitrile dans une plage de 0 à 50 % en poids.

**4.** Composition selon l'une quelconque des revendications précédentes, dans laquelle l'agent anti-mottant de silice est présent en une quantité de 3 à 15 % en poids par rapport au polymère réticulé.

**5.** Utilisation de la composition selon l'une quelconque des revendications précédentes comme liant pour une anode d'une batterie rechargeable.

6. Composition d'électrode pour une anode de batterie rechargeable comprenant :

   - la composition de l'une quelconque des revendications ci-dessus,
   - un matériau actif ; et
   - un matériau conducteur.

7. Composition d'électrode selon la revendication 5, dans laquelle le matériau actif est choisi parmi au moins l'un parmi des matériaux de carbone, un polymère conducteur, un métal ou un alliage de celui-ci ou un sel de celui-ci ou un sulfate de celui-ci ou toute combinaison de ceux-ci.

8. Composition d'électrode selon l'une quelconque des revendications 5 à 6, dans laquelle le matériau conducteur est un matériau à base de carbone.

9. Procédé de fabrication d'une anode comprenant :

   - fourniture à une extrudeuse de la composition selon l'une quelconque des revendications 1 - 4,
   - fourniture à l'extrudeuse d'un matériau actif et d'un matériau conducteur, et
   - stratification de l'extrudat résultant sur une surface d'un collecteur de courant d'anode.

10. Procédé selon la revendication 9, dans lequel la teneur totale en solides de la composition selon l'une quelconque des revendications 1 à 4, d'un matériau actif et d'un matériau conducteur est d'au moins 70 % en poids.

11. Procédé selon la revendication 9, dans lequel le collecteur de courant d'anode comprend un métal choisi parmi l'un parmi le fer, le cuivre, l'aluminium, le nickel, l'acier inoxydable, le titane, le tantale, l'or ou le platine.

a                                                                           b

Figure 1

a                                                          b

Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3902855 A1
- EP 3053938 A
- US 2019305316 A1

**Non-patent literature cited in the description**

- **J.-H. LEE et al.** *Journal of Power Sources*, 2005, vol. 147, 249-255
- *CHEMICAL ABSTRACTS*, 67701-08-6
- *CHEMICAL ABSTRACTS*, 61790-51-0
- *CHEMICAL ABSTRACTS*, 68439-57-6
- *CHEMICAL ABSTRACTS*, 3710-84-7
- *CHEMICAL ABSTRACTS*, 872-50-4
- *CHEMICAL ABSTRACTS*, 7782-42-5
- *CHEMICAL ABSTRACTS*, 9010-93-9